# NEUE EUROPÄISCHE PATENTSCHRIFT

(11) **EP 2 565 449 B2**
(45) Veröffentlichungstag und Bekanntmachung des Hinweises auf die Entscheidung über den Einspruch: **13.01.2021**
(45) Hinweis auf die Patenterteilung: 24.06.2015
(21) Anmeldenummer: 12182635.8
(22) Anmeldetag: 31.08.2012
(51) Int. Cl.: F03D 11/00, G01N 25/72

(54) **Verfahren und Vorrichtung zur thermischen Überprüfung des Bauzustandes von Windkraftanlagen**
Method and apparatus for thermal monitoring the structural conditions of a wind turbine
Méthode et dispositif de surveillance thermique de l'état structurel d'une éolienne

(30) Priorität: 01.09.2011 DE 102011111789; 18.11.2011 DE 102011118833
(43) Veröffentlichungstag der Anmeldung: 06.03.2013
(73) Patentinhaber: Rolawind GmbH, 45481 Mülheim a.d. Ruhr (DE)
(72) Erfinder: Zell, Horst, 45481 Mühlheim (DE)
(74) Vertreter: Sparing Röhl Henseler

(56) Entgegenhaltungen:
- WO-A1-2006/074690
- WO-A1-2009/071056
- WO-A1-2010/051278
- WO-A1-2011/113402
- DE-A1- 10 022 568
- US-A1- 2003 127 862
- US-A1- 2010 103 260
- MEINLSCHMIDT P ET AL: "Thermographic inspection of rotor blades", INTERNET CITATION, 26. September 2006 (2006-09-26), Seiten 1-9, XP002525987, ISSN: 1435-4934 Gefunden im Internet: URL:http://www.ndt.net/article/ecndt2006/d oc/Tu.1.5.3.pdf [gefunden am 2009-04-29]
- Georg Dittié ET AL: "Umwelteinflüsse auf die Genauigkeit von Gebäudethermografien", , 28. September 2007 (2007-09-28), XP055131762, Gefunden im Internet: URL:http://www.ndt.net/article/dgzfp-irt-2 007/Inhalt/v01.pdf [gefunden am 2014-07-25]
- MEINLSCHMIDT, P.; et al.: "Thermographic Inspection of Rotor Blades", Journal of Non-destructive Testing;, 25 September 2006 (2006-09-25), pages 1-9, Berlin ISSN: 1435-4934 Retrieved from the Internet: URL:http://www.ndt.net/article/ecndt2006/d oc/Tu.1.5.3.pdf
- "Internetauftritt der IHK Nürnberg für Mittelfranken entnommen", WiM - Wirtschaft in Mittelfranken, January 2006 (2006-01), page 49;, Retrieved from the Internet: URL:https://www.ihk-nuernberg.de/de/IHK-Ma gazin-WiM/WiM-Archiv/WIM-Daten/2006- 01/Unternehmen-und-Personen/Technologiefue hrer-bei-Infrarot-Kameras.jsp
- RUTZ, F.; et al.: "Non-Destructive Testing of Glass-Fibre Reinforced Polymers using Te- rahertz Spectroscopy", Journal of Non-destructive Testing, 25 September 2006 (2006-09-25), pages 1-8, Berlin ISSN: 1435-4934 Retrieved from the Internet: URL:Journal of Nondestructive Testing

## Beschreibung

Die Erfindung betrifft ein Verfahren zur Überprüfung des baulichen Zustands von Windkraftanlagen in Form von mehrere Rotorblätter aufweisenden Windrädern, wobei die Windkraftanlagen oder Rotorblätter von einer oder mehreren an und/oder in einem mobilen Standort installierten thermografischen Aufnahmeeinrichtungen erfasst und die dabei ermittelten Messwerte im Hinblick auf etwaige Beschädigungen ausgewertet werden.

Im Zuge der wachsenden Bedeutung regenerativer Energien werden in den vergangenen Jahren international verstärkt Windkraftanlagen gebaut. Wegen der oberhalb von Gewässern, insbesondere der Meere herrschenden starken Winde werden auch mehr und mehr offshore Windkraftanlagen gebaut. Diese bringen den entscheidenden Vorteil mit sich, dass sie, an weniger attraktiven Standorten positioniert, nicht die Landschaft beeinträchtigen. Die Windkraftanlagen müssen, wie andere Industrieanlagen auch, in regelmäßigen Intervallen gewartet werden. Dies gilt für Windkraftanlagen umso mehr, als sie hohen dynamischen Belastungen ausgesetzt sind. Überprüfungen des baulichen Zustands vor allem der Rotorblätter müssen daher in vergleichsweise kurzen Abständen veranlasst werden.

Diese Inspektionen sind speziell bei offshore Windkraftanlagen auf dem Seeweg sehr problematisch, weil das Personal per Boot zu dem jeweiligen Windrad gelangen muss. Die Inspektionsarbeiten erfordern dann an den Rotorblättern hohe akrobatische Fähigkeiten, weil die Personen über eine Hochgebirgsausbildung bzw. Industriekletterausbildung ähnlich Bergsteigern verfügen müssen. Voraussetzung für diese Inspektionen ist außerdem, dass sich das jeweilige Rotorblatt zumindest annährend in der Sechsuhrstellung befindet. Ist die Überprüfung des ersten Rotorblattes abgeschlossen, muss das Windrad gedreht und das als nächstes zu überprüfende Rotorblatt in die Sechsuhrstellung gebracht werden. Dass dies mit einigem Aufwand zusammenhängt, liegt auf der Hand. Aus der DE 10 2010 048 400.8 oder WO 2011/113402 A1 sind ein Verfahren und eine Vorrichtung zu Überprüfung des baulichen Zustands von Windkraftanlagen in Form von mehrere Rotorblätter aufweisenden Windrädern bekannt. Dabei kommen Luftfahrzeuge, in der Regel Hubschrauber, zum Einsatz. Diese verfügen über geeignete Aufnahmeeinrichtungen zum Beispiel in der Form von Wärmbildkameras an Bord, über welche die für die Inspektion notwendigen Daten erfasst werden. Dabei hat es sich herausgestellt, dass die Messwerte für die Rotorblätter - völlig unabhängig von etwaigen Beschädigungen - teilweise grob verfälscht sind. Dies wiederum liegt maßgeblich an thermischen Beanspruchungen der Rotorblätter, die in Zusammenhang mit ihrem Betrieb stehen. Das heißt, durch die Reibung mit der Luft bei der Rotation werden die Rotorblätter thermisch beansprucht; sie erwärmen bzw. erhitzen sich und zwar über die Konturen des Rotorblattes verteilt unterschiedlich. Ein ähnliches Verfahren unter Verwendung einer Drohne ist in der US 2010/013260 A1 beschrieben.

Damit stellt sich der vorliegenden Erfindung die Aufgabe, ein Verfahren zur Überprüfung des baulichen Zustands von Windkraftanlagen mittels thermografischer Aufnahmeeinrichtungen zu schaffen, mit dem möglichst exakte Messwerte ermittelt werden können.

Diese Aufgabe wird dadurch gelöst, dass die ermittelten Messwerte unter Berücksichtung der durch den Betrieb der Rotorblätter durch den Zeitpunkt der Messung bedingten thermischen Beanspruchungen ausgewertet werden.

Während des üblichen Betriebs in Form der Rotation der Rotorblätter und der Bewegung anderer dynamisch beanspruchter Gebäudeteile kommt es zu nennenswerten thermischen Beanspruchungen. Diese hängen maßgeblich mit der Reibung zwischen den Rotorblättern und der Luft während der Rotation zusammen. Durch Beschleunigungsfehler, welche durch die Drehung entstehen, kommt es ebenfalls zu verfälschenden Abweichungen. Die damit einhergehenden Messfehler beeinflussen die Messergebnisse der thermografischen Aufnahmeeinrichtungen erheblich. Daher werden die ermittelten Messwerte erst ausgewertet bzw. ausgegeben, wenn die durch den Betrieb der Rotorblätter bei ihrer Rotation bedingten thermischen Beanspruchungen in entsprechender Weise berücksichtigt sind. Dabei ist auf den Zeitpunkt der Messung und die eventuell in diesem Moment gegebene Beanspruchung abzustellen. Die Berücksichtigung dieser Beanspruchungen führt im Ergebnis zu einer plastischen, räumlichen und positionsgenauen Auswertung und Dokumentation.

Konkret bedeutet dies, dass Daten zu den durch den Zeitpunkt der Messung bedingten thermischen Beanspruchungen zu den ermittelten Messwerten in Relation gesetzt werden. Das heißt, es werden einerseits absolute Messwerte über die thermografische Einrichtung erfasst. Diese müssen dann aber zu Daten in Relation gesetzt werden, durch welche die zum Zeitpunkt der Messungen gegebenen thermischen Beanspruchungen der Rotorblätter Berücksichtigung finden. Anders formuliert, von den thermografisch ermittelten Messwerten müssen die Daten heruntergerechnet werden, die durch äußere Umstände wie Luftreibung, Witterung, Temperatur, Jahreszeit etc. beeinflusst sind. Übrig bleiben dann die tatsächlichen Messwerte, über die sich auf tatsächliche Beschädigungen der Rotorblätter schließen lässt.

Dies führt dann letztlich dazu, dass die Messwerte unter Berücksichtigung der in Relation gesetzten Daten ausgegeben werden, das heißt nach Bearbeitung der Temperaturmessfehler mittels einer speziellen Software und einer damit einhergehenden Korrektur erfolgt dann die Auswertung und Ausgabe der in Relation gesetzten, also überarbeiteten bzw. korrigierten Messwerte. Entscheidend beeinflusst werden die Rohdaten der Messergebnisse durch den Betrieb der Rotorblätter, sprich durch ihre Rotation, bei der sie sich durch die Reibung an der Luft aufwärmen bzw. aufheizen. Erfindungsgemäß ist daher vorgesehen, dass thermische Beanspruchungen durch Reibung während des Betriebs der Rotorblätter berücksichtigt werden. Gleiches gilt für andere Formen von thermischer Beanspruchung wie Sonneneinstrahlung, Außentemperatur etc.

Ein Stück weit können diese Beanspruchungen standardisiert werden, da die thermischen Belastungen der Rotorblätter bestimmten Gesetzmäßigkeiten entsprechen, insbesondere solche durch Luftreibung bei thermischen Beanspruchungen. In diesem Sinne ist der Vorschlag zu verstehen, wonach thermische Beanspruchungen getrennt nach Segmenten des Rotorblatts berücksichtigt werden.

Nach einer Ausführungsform der Erfindung ist vorgesehen, dass die Rotorblätter in in ihrer Querachsenrichtung verlaufende Segmente, Abschnitte oder Zonen eingeteilt werden. Es erfolgt also in zweckmäßiger Weise eine Einteilung der Rotorblätter in Richtung Querachse. Anschließend im Rahmen der Auswertung werden die einzelnen Segmente dem jeweiligen Rotorblatt zugeordnet und möglichst zu einer Komplettdarstellung oder repräsentativen Teildarstellungen zusammengesetzt.

Von besonderer Bedeutung wegen des hohen Korrekturbedarfs in Hinblick auf die durch eine thermografische Aufnahmeeinrichtung erfassten Messwerte ist die Querachsenrichtung eines Rotorblattes. So ist vorgesehen, dass in Querachsenrichtung eines Rotorblattes zumindest die Segmente vordere Kante, Blattfläche und hintere Kante berücksichtigt werden. Bei der Rotation der Rotorblätter erfährt die Luftströmung besonders an der Vorderkante des Rotorblattes eine hohe Beschleunigung, Luftteilchen und Rotorblatt in diesem Bereich werden also besonders erwärmt, was zugleich hohen Korrekturbedarf in Bezug auf die Messergebnisse mit sich bringt. Durch eine Herabsetzung der Beschleunigung auf der eigentlichen Blattfläche ist die Temperaturentwicklung in diesem Bereich üblicherweise niedriger. Sie steigt dann in Richtung hintere Kante wieder an, verglichen mit der Vorderkante allerdings auf ein geringeres Maß. Diese standardisierten Daten für eine Temperaturaufnahme des Rotorblattes im Betrieb müssen berücksichtigt und bei der Ausgabe der endgültigen Messdaten herausgerechnet werden, um verfälsche Messergebnisse vermeiden zu können.

Zwecks Aufnahme der thermografischen Messwerte ist insbesondere alsmobiler Standort an ein Muster zugelassenes Luftfahrzeug oder bemanntes Luftfahrzeug wie ein Hubschrauber, ein Ballon, ein Zeppelin, ein Drachen oder eine Drohne gedacht. Modellhubschrauber / Drohnen (unbemannte Luftfahrzeuge) unter 25 KG benötigen keine Verkehrszulassung und werden für die bauliche Zustandsprüfung nicht eingesetzt.

Die Daten werden aus einem bevorzugten Abstand zwischen Rotorblatt und Aufnahmeeinrichtung von ca. 0,01 bis 10.000 m erfasst.

Die Vorrichtung zur Durchführung des erfindungsgemäßen Verfahrens umfasst in einem bevorzugten Ausführungsbeispiel fünf Komponenten. Dabei handelt es sich zunächst um ein Muster zugelassenes Luftfahrzeug oder ein bemanntes Luftfahrzeug wie zum Beispiel einen Hubschrauber, einen Ballon, einen Zeppelin, einen Drachen oder eine Drohne und eine oder mehrere thermografische Aufnahmeeinrichtungen. Diese werden ggf. parallel zu weiteren, auf thermografischer oder auch anderer Basis wie etwa Radar-, Ultraschall-TeraHerz, Lasertechnik oder 3 D Scanning basierender Geräte eingesetzt, wobei über letztere speziell dreidimensionale Aufnahmen hergestellt werden. Auf diese Weise kann aus unterschiedlichen Winkeln aufgenommen werden. All diese auch mittels unterschiedlicher Techniken - z. B. Thermografie, TeraHerz, 3D-Scann, Laser-, Radar-, Ultraschall- und/oder Infrarottechnik, vorzugsweise Dual Band Infrarottechnik - erfasster Bilder können im Ergebnis überlagert werden. Somit lässt sich die Position des gemessenen Objektes in der Tiefe des Rotorblattes genauer bestimmen. Kompakte Gehäuse dienen zur Aufnahme einer oder mehrerer dieser Aufnahmegeräte. Der Hubschrauber fliegt die Rotorblätter einzeln oder gemeinsam unabhängig von ihrer Position und ihrem sonstigen Zustand ab. Dabei erfolgt ein Scanning der einzelnen Rotorblätter, vorzugsweise über TeraHerz-Wellen, bei dem zum Beispiel die Materialdichte des Rotorblattes erfasst wird. Mit diesem Verfahren können speziell auch gute Tiefeninformationen erhalten werden. In vorteilhafter Weise ist das Scannen auch bei verschmutzten Anlagen möglich, die z. B. durch Salzkristalle beeinträchtigt sind. Als dritte Komponente umfasst die Vorrichtung eine Einheit zur (Zwischen)Speicherung dieser Daten und als vierte die erfindungsgemäße Einheit, über welche die ermittelten Messwerte unter Berücksichtung der durch den Betrieb der Rotorblätter zum Zeitpunkt der Messung bedingten thermischen Beanspruchungen ausgewertet wird. Dies erfolgt zweckmäßiger Weise in einem separaten und automatischen Verfahrensschritt vor der eigentlichen Ausgabe der Messwerte, über die sich dann zum Beispiel auf Beschädigungen an den Rotorblättern schließen lässt. Schließlich umfasst die Vorrichtung eine Einheit zur Ausgabe der endgültigen, korrigierten und unter Berücksichtung der speziellen thermischen Beanspruchungen von Rotorblättern bei ihrem Betrieb errechneten Messwerte, die das auswertende Personal dann in den Zustand versetzen, sich im wahrsten Sinne des Wortes ein Bild über den baulichen Zustand des überprüften Rotorblattes machen zu können.

Nach einer weiteren Variante der Erfindung ist daran gedacht, dass per Scanning und per thermografischer Messung erfasste Daten miteinander in Relation gesetzt werden. Auf den gescannten Körperwiez. B. Rotorblatt, Gehäusegondel, Turm oder Brücke können etwa thermografische Messungen aufgelegt werden, um die Positionen einzelner Beschädigung lokalisieren zu können.

Die Erfindung zeichnet sich damit insbesondere dadurch aus, dass ein Verfahren zur Überprüfung des baulichen Zustands von Bauwerken wie Gebäuden, Türmen, Masten, Brücken und im Besonderen von Windkraftanlagen geschaffen ist. Neben Turm und Gehäusegondel einer Windkraftanlage dreht sich die Erfindung um Windräder, speziell solche in offshore Windkraftanlagen, wobei über eine thermografische Aufnahmeeinrichtung erfasste Messdaten korrigiert werden können. Damit ist eine plastische, räumliche, positionsgenaue Auswertung und Dokumentation möglich. Die Korrektur erfolgt in der Form, dass Daten zu den thermografisch ermittelten Messwerten in Relation gesetzt werden, durch welche die durch den Betrieb der Rotorblätter zum Zeitpunkt der Messung bedingten thermischen Beanspruchungen insbesondere durch Reibung durch die Drehung der Rotorblätter berücksichtigt werden können. Durch die Unterstützung durch einen Hubschrauber ist ein flexibler Einsatz möglich, der insbesondere auch völlig unabhängig von Form, Art und Größe des zu überprüfenden Windrades ist. Denkbar ist der Einsatz an um eine Horizontalachse drehbar gelagerten Rotorblättern ebenso wie an um eine vertikale Achse drehbar gelagerten.

Weitere Einzelheiten und Vorteil des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist.

Es zeigen:
- Figur 1: einen Hubschrauber im Einsatz an einem Windrad,
- Figur 2: ein Rotorblatt,
- Figur 3: einen Abschnitt dieses Rotorblattes.

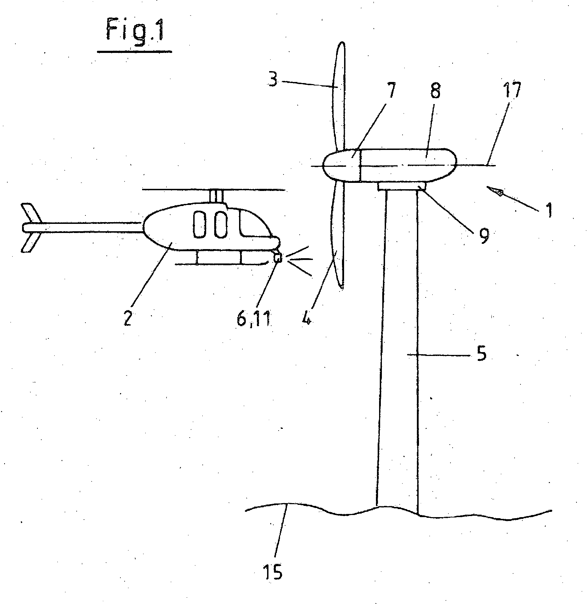

Figur 1 zeigt ein Windrad 1 als Bestandteil einer Windkraftanlage in einem Gewässer, zu dessen Veranschaulichung der Wasserspiegel angedeutet und mit dem Bezugszeichnen 15 versehen ist. Das Windrad 1 umfasst einen im Meeresboden und/oder schwimmend verankerten Turm 5, auf dem das eigentliche Windrad positioniert ist. Mit dem Bezugszeichen 3 und 4 sind zwei um eine Horizontalachse 17 drehbare Rotorblätter gezeichnet, mit 7 die Nabe und mit 8 die so genannte Gondel, welche drehbar auf der Windrichtungsnachführung 9 angeordnet ist. Dieses Windrad 1, genauer gesagt sein Rotorblatt 4, der Turm 5 oder die Gondel 8, werden in der Darstellung gemäß Figur 1 gerade von einem Hubschrauber 2 bzw. einer darauf installierten, als Kamera 6 ausgebildeten thermografischen Aufnahmeeinrichtung 11 erfasst. Auch die Erfassung etwa über TeraHerz-Wellen, 3D-Scannen oder Lasertechnik ist denkbar. Die Positionierung der Rotorblätter 3, 4 ist dabei ebenso gleichgültig wie deren Zustand, insbesondere müssen die Rotorblätter 3, 4 vor der hier dargestellten Erfassung auch nicht von Verunreinigungen befreit werden.

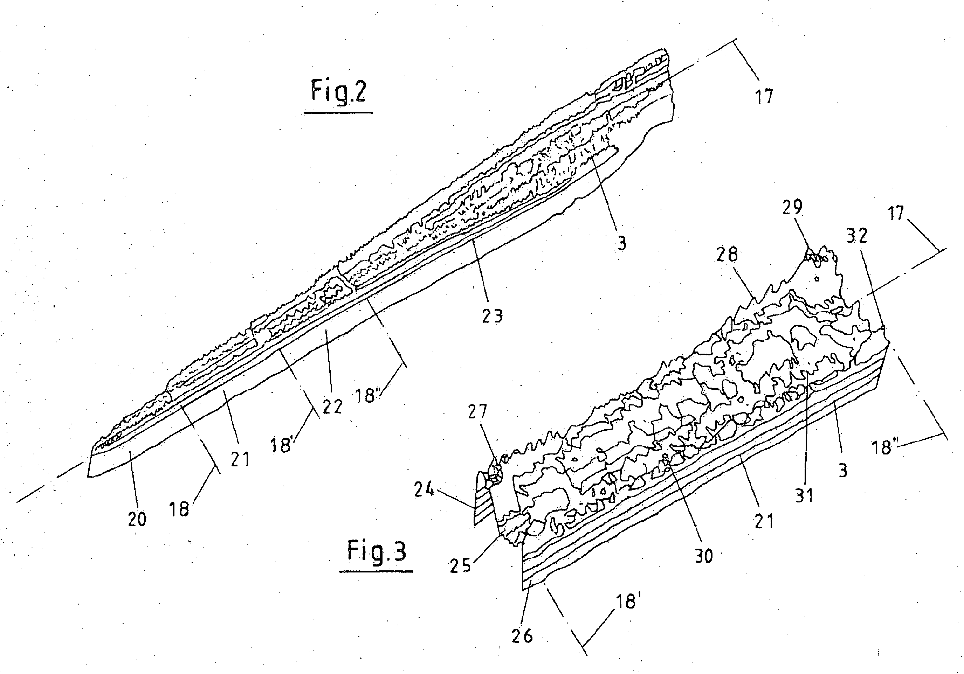

In Figur 2 ist ein solches Rotorblatt 3 mit den in seiner Längsachse 17 verlaufenden Segmenten dargestellt, hier sind es vier Segmente 20 bis 23.

Schließlich zeigt Figur 3 das in Figur 2 mit dem Bezugszeichen 22 versehene Segment bzw. den entsprechenden Abschnitt zwischen den beiden Querachsen 18' und 18" in einer vergrößerten Darstellung. Thermische Beanspruchungen, also Punkte, die sich in Folge der bei der Rotation der Rotorblätter entstehenden Reibung besonders erwärmen, sind als Spitzen dargestellt. Diese befinden sich insbesondere an der vorderen Kante 24 des Rotorblattes 3 und sind beispielhaft mit dem Bezugszeichen 27, 28 und 29 versehen. In Richtung Blattfläche 25 sinkt dann die thermische Belastung deutlich; die Beschleunigung ist geringer und die Erwärmung entsprechend weniger. Die thermische Beanspruchung steigt dann in Richtung hintere Kante 26 des Rotorblattes 3 wieder an, symbolisiert durch die Spitzen 30, 31, 32, die allerdings in Bezug auf die Spitze 27, 28 und 29 an der Vorderkante 24 des Rotorblattes 3 deutlich geringer sind. Mit dem erfindungsgemäßen Verfahren werden die endgültigen Messergebnisse um diese mit der thermischen Beanspruchung zusammenhängenden Daten bereinigt. Die Auswertung zu etwaigen Beschädigungen der Rotorblätter folgt also unter Berücksichtigung dieser thermischen Beanspruchungen, wie sie beispielhaft in Figur 3 dargestellt sind.

## Patentansprüche

1. Verfahren zur Überprüfung des baulichen Zustands von Windkraftanlagen in Form von mehrere Rotorblätter (4) aufweisenden Windrädern (1) während des üblichen Betriebs, wobei die Windkraftanlagen von einer oder mehreren an und/oder in einem mobilen Standort installierten thermografischen Aufnahmeeinrichtungen (6) erfasst und die dabei ermittelten Messwerte unter Berücksichtigung der durch den Betrieb der Rotorblätter (4) zum Zeitpunkt der Messung bedingten thermischen Beanspruchungen in Hinblick auf etwaige Beschädigungen ausgewertet werden, **dadurch gekennzeichnet, dass** thermische Beanspruchungen der Rotorblätter (4) durch die Reibung mit der Luft bei der Rotation während des Betriebs der Rotorblätter (4) berücksichtigt werden, die die Rotorblätter (4) über ihre Konturen verteilt unterschiedlich erwärmen als Folge der Luftströmung an der Vorderkante, auf der Blattfläche und in Richtung der hinteren Kante, wobei thermische Beanspruchungen getrennt nach Segmenten des Rotorblattes (4) berücksichtigt werden und in Querachsenrichtung eines Rotorblattes (4) zumindest die Segmente vordere Kante (24), Blattfläche (25) und hintere Kante (26) berücksichtigt werden und eine durch diese thermischen Beanspruchungen bewirkte Temperaturaufnahme des Rotorblattes (4) im Betrieb bei der Ausgabe der endgültigen Messdaten herausgerechnet wird.

2. Verfahren nach Anspruch 1, **dadurch gekennzeichnet, dass** als mobiler Standort ein Muster zugelassenes Luftfahrzeug und/oder bemanntes Luftfahrzeug wie ein Hubschrauber, ein Ballon, ein Zeppelin, ein Drachen oder eine Drohne eingesetzt wird.

3. Verfahren nach Anspruch 1, **dadurch gekennzeichnet, dass** die thermografischen Aufnahmen mittels Dual Band Infrarot Technik hergestellt werden.

4. Verfahren nach Anspruch 1, **dadurch gekennzeichnet, dass** per Scanning und per thermografischer Messung erfasste Daten miteinander in Relation gesetzt werden.

## Claims

1. Method for monitoring the structural state of wind turbines in the form of rotors (1) having multiple rotor blades (4) during normal operation, the wind turbines being monitored by one or more thermographic recording devices (6) installed at and/or in a mobile location, and the measured values thereby determined being evaluated in consideration of thermal loads caused by the operation of the rotor blades (4) at the time of measurement with regard to possible instances of damage, **characterized in that** thermal loads on the rotor blades (4) through friction with the air during rotation in the course of operation of the rotor blades (4) are considered, which warm up the rotor blades (4) unequally distributed over their contours as a consequence of the airflow at the leading edge (24), at the blade area (25) and in the direction of the trailing edge (26), wherein allowance is made for thermal loads separately according on the basis of segments of the rotor blade (4), and allowance is made at least for the segments that are the leading edge (24), the blade area (25) and the trailing edge (26) in the direction of the transverse axis of a rotor blade (4), and a temperature absorption of the rotor blade (4) during operation resulting from the thermal loads is removed for final measurement data output.

2. Method according to claim 1, **characterized in that** a type-certificated aircraft and/or manned aircraft such as a helicopter, a balloon, a zeppelin, a kite or a drone is used as the mobile location.

3. Method according to claim 1, **characterized in that** the thermographic recordings are produced by means of dual band infrared technology.

4. Method according to claim 1, **characterized in that** data recorded by scanning and by thermographic measurement are set in relation to one another.

## Revendications

1. Procédé pour examiner pendant le fonctionnement normal l'état de la structure d'éoliennes en forme de roues éoliennes (1) qui présentent plusieurs pales de rotor (4), dans lequel les éoliennes sont prises en compte par un ou plusieurs dispositifs d'enregistrement thermographique (6) installés au voisinage d'une et/ou dans une position mobile et dans lequel les valeurs mesurées sont exploitées en prenant compte des sollicitations thermiques résultant du fonctionnement des pales de rotor (4) au moment de la mesure en vue d'éventuels dommages, **caractérisé en ce que** des sollicitations thermiques des pales de rotor (4) dues au frottement avec l'air lors de la rotation pendant le fonctionnement des pales de rotor (4) sont prises en compte, qui, sous l'effet du flux d'air au bord d'attaque, à la surface des pales et dans la direction du bord de fuite, réchauffent inégalement les pales de rotor (4), des sollicitations thermiques étant prises en compte séparément selon des segments de la pale de rotor (4), et au moins les segments bord d'attaque (24), surface des pales (25) et bord de fuite (26) étant pris en compte en direction de l'axe transversal d'une pale de rotor (4), et une absorption thermique de la pale de rotor (4) en fonctionnement résultant desdites sollicitations thermiques étant déduite lors de l'émission des données finales mesurées.

2. Procédé selon la revendication 1, **caractérisé en ce que** comme position mobile on utilise un modèle d'aéronef autorisé et/ou un aéronef avec pilote comme un hélicoptère, un ballon, un Zeppelin, un cerf-volant ou un drone.

3. Procédé selon la revendication 1, **caractérisé en ce que** les enregistrements thermographiques sont réalisés au moyen de la technologie infrarouge à double bande.

4. Procédé selon la revendication 1, **caractérisé en ce que** les données saisies par balayage et par mesure thermographique sont mises en relation les unes avec les autres.
